# EUROPÄISCHE PATENTANMELDUNG

(11) **EP 4 258 233 A1**
(43) Veröffentlichungstag der Anmeldung: **11.10.2023**
(21) Anmeldenummer: 22166521.9
(22) Anmeldetag: 04.04.2022
(51) Int. Cl.: G07G 1/00, G07G 1/12, G06Q 20/20, A47F 9/04, B62B 5/00

(54) **KASSIERANLAGE FÜR WAREN**

(71) Anmelder: ALDI SÜD Dienstleistung-SE & Co. oHG, 45476 Mülheim/Ruhr (DE)
(72) Erfinder: KRONE, Jürgen, 50858 Köln (DE); VEISER, Michael, 45470 Mülheim an der Ruhr (DE)
(74) Vertreter: Andrejewski - Honke Patent- und Rechtsanwälte Partnerschaft mbB

(57) **Zusammenfassung**

Gegenstand der Erfindung ist eine Kassieranlage für Waren (W), insbesondere Einzelhandelswaren (W), die in ihrem grundsätzlichen Aufbau mit einem Kassentisch (1) mit einer Kasse (6) sowie einem elektronischen Lesegerät (5) für die Waren (W) ausgerüstet ist. Ferner ist ein Transportband (7) für die Waren realisiert und sind zwei warenstromendseitig des Kassentisches (1) vorgesehene Warenschächte (4) Bestandteil der Kassieranlage. Erfindungsgemäß ist Jedem Warenschacht (4₁, 4₂) eine eigene elektronische Bezahleinheit (15₁, 16₁; 15₂, 16₂) zugeordnet.

## Beschreibung

Die Erfindung betrifft eine Kassieranlage für Waren, insbesondere Einzelhandelswaren, mit einem Kassentisch mit einer Kasse sowie einem elektronischen Lesegerät für die Waren, ferner mit einem Transportband für die Waren, und mit wenigstens zwei warenstromendseitig des Kassentisches vorgesehenen Warenschächten.

Kassieranlagen für Waren werden beispielhaft in der EP 1 090 570 B1 der Anmelderin beschrieben. Hier geht es um eine spezielle L-förmige Parkeinrichtung für einen Einkaufswagen, um einen ergonomisch günstigen Warenstrom von einer Preis-/Mengenerfassungseinrichtung bis hin zur problemlosen Füllung des Einkaufswagens zu realisieren. Bei der Preis-/Mengenerfassungseinrichtung handelt es sich - vergleichbar dem elektronischen Lesegerät - typischerweise um einen Scanner bzw. Warenscanner, mit dessen Hilfe auf den jeweils zu erfassenden Waren angebrachte Strichcodes gelesen werden können. Dadurch werden der Preis und gegebenenfalls auch die Menge der betreffenden Ware erfasst und können in der elektronischen Kasse aufaddiert werden.

Ein vergleichbarer Stand der Technik ist durch die DE 203 00 926 U1 bekannt geworden. In diesem Fall geht es im Wesentlichen darum, den Bereich eines Einstieges in Verbindung mit einer Tür in die Kassieranlage zu optimieren.

Bei der durch die DE 20 2019 103 238 U1 bekannten Kassieranlage für Waren wird so vorgegangen, dass der Warenschacht lösbar an einen Kassentisch angeschlossen ist. Auf diese Weise lässt sich eine flexible und einfache Anpassung an das tatsächliche Kundenverhalten realisieren.

Im Rahmen des gattungsbildenden Standes der Technik nach der DE 20 2009 010 397 U1 ist eine Kassieranlage vorgesehen und realisiert, die warenstromendseitig des Kassentisches mit zwei Warenschächten ausgerüstet ist. Dadurch können grundsätzlich mehrere Kunden gleichzeitig an der Kassieranlage bedient werden. Allerdings ist an dieser Stelle nur ein Scanner und eine Registrierkasse in Verbindung mit einer Geldlade vorgesehen, so dass hierdurch die Abfertigung bzw. der Zahlvorgang einzelner Kunden nicht wirklich beschleunigt wird.

Der Erfindung liegt das technische Problem zugrunde, eine derartige Kassieranlage für Waren und insbesondere Einzelhandelswaren so weiterzuentwickeln, dass die Kundenfrequenz erhöht und die Geschwindigkeit bei der Abfertigung einzelner Kunden gesteigert werden kann.

Zur Lösung dieser technischen Problemstellung ist eine gattungsgemäße Kassieranlage für Waren und insbesondere Einzelhandelswaren im Rahmen der Erfindung dadurch gekennzeichnet, dass jedem Warenschacht eine eigene elektronische Bezahleinheit zugeordnet ist, so dass zumindest während des Zahlvorganges eines ersten Kunden an einer ersten Bezahleinheit des ersten Warenschachtes die Waren eines zweiten Kunden mit Hilfe des elektronischen Lesegerätes erfasst und in den zweiten Warenschacht überführt werden können.

Erfindungsgemäß sind also zunächst einmal die beiden warenstromendseitig des Kassentisches vorgesehenen Warenschächte realisiert. Als Besonderheit und zusätzlich zum gattungsbildenden Stand der Technik nach der DE 20 2009 010 397 U1 ist nun im Rahmen der Erfindung jedem Warenschacht eine eigene elektronische Bezahleinheit zugeordnet. Bei dieser elektronischen Bezahleinheit handelt es sich um eine solche, die nicht für die Bargeldzahlung eingerichtet ist, wie dies typischerweise für die Kasse des Kassentisches der Fall ist und beobachtet wird. Vielmehr erfolgt mit Hilfe der elektronischen Bezahleinheit ein rein elektronischer und bargeldloser Bezahlvorgang.

Dieser kann im einfachsten Fall durch das Einlesen einer Karte wie beispielsweise einer EC-Karte, einer Kreditkarte etc. des Kunden vorgenommen und durchgeführt werden. Grundsätzlich lassen sich mit Hilfe der elektronischen Bezahleinheit aber auch elektronische Zahlvorgänge über ein Mobiltelefon des Kunden oder sonst wie auf elektronischem Wege bargeldlos abwickeln.

So oder so ist die elektronische Bezahleinheit im Endeffekt dadurch gekennzeichnet, dass der Zahlvorgang gleichsam autark und ohne Beteiligung einer in der Regel vorgesehenen Kassierperson erfolgt. Die Kassierperson kann in diesem Zusammenhang gleichwohl eine Kontrollfunktion übernehmen. So oder so wird der autarke Bezahlvorgang zwischen dem Kunden und der zugehörigen elektronischen Bezahleinheit und seine Dauer erfindungsgemäß nun genutzt, um während der Abwicklung des elektronischen Zahlvorganges die Waren eines zweiten Kunden mit Hilfe des elektronischen Lesegerätes zu erfassen.

D.h., während der Zahlvorgang des ersten Kunden durch eine entsprechende Eingabe und Prüfung an der elektronischen Bezahleinheit durchgeführt wird, kann der zweite Kunde mit seinen Waren bereits bedient werden, so dass es an dieser Stelle zu einer teilweise zeitlichen Überlappung zwischen den einzelnen Kassiervorgängen bzw. Abfertigungsvorgängen des ersten und zweiten Kunden kommt. Daraus resultiert eine erhebliche Beschleunigung des Kassiervorganges und auch der Abfertigung der einzelnen Kunden. Denn bisher konnte die Erfassung der Waren des zweiten Kunden erst dann gestartet werden, wenn der Bezahlvorgang für den ersten Kunden erfolgreich abgeschlossen wurde.

Derartiges ist erfindungsgemäß nun nicht (mehr) erforderlich. Vielmehr überlappen sich der Zahlvorgang des ersten Kunden und die Warenerfassung des zweiten Kunden zeitlich. Es ist sogar möglich, dass der Zahlvorgang des zweiten Kunden bereits gestartet wird, während der Zahlvorgang des ersten Kunden noch nicht abgeschlossen ist. Hierbei geht die Erfindung insgesamt von der Erkenntnis aus, dass heutzutage eine wachsende Anzahl solcher Zahlvorgänge beim Einkauf von Waren und insbesondere Einzelhandelswaren elektronisch durchgeführt wird. Das erfolgt typischerweise ohne Beteiligung der Kassierperson, so dass die Zeit in diesem Zusammenhang vorteilhaft für die Abfertigung eines zweiten Kunden genutzt werden kann. Das gilt auch dann, wenn etwaige Probleme beim Bezahlvorgang des ersten Kunden auftreten, denn die Abfertigung des zweiten Kunden ist hiervon völlig losgelöst.

Auf diese Weise wird der Zahlvorgang im Rahmen der Erfindung erheblich beschleunigt, so dass hierdurch nicht nur der Warenumsatz pro Kassieranlage steigt, sondern auch die Kundenzufriedenheit und Kasseneffizienz erhöht werden. Hierin sind die wesentlichen Vorteile zu sehen.

Nach vorteilhafter Ausgestaltung sind beide Bezahleinheiten jeweils an einen Arm und insbesondere Schwenkarm angeschlossen. Dadurch erfolgt die Bedienung besonders einfach, intuitiv und ergonomisch, weil sich der Kunde bei seinem Zahlvorgang die Bezahleinheit entsprechend ausrichten und positionieren kann. Hierzu trägt ergänzend der Umstand bei, dass vorteilhaft beide Bezahleinheiten jeweils randseitig eines die beiden Warenschächte kopfseitig aufweisenden Korpuselementes eines Kassentisches angeordnet sind.

D.h., die beiden Warenschächte finden sich in der Regel kopfseitig eines Korpuselementes, welches typischerweise im rückwärtigen Bereich eines Kassenarbeitsplatzes angeordnet ist und diesen im Allgemeinen abschließt.

Tatsächlich mag der Kassentisch über eine größtenteils plane Oberfläche verfügen, in welche das Transportband für die Waren eingelassen ist. Nach unten und zur Seite hin finden sich jeweils Korpuselemente des Kassentisches, die mit beispielsweise Aufnahmefächern für Waren oder auch Einkaufstaschen ausgerüstet sind.

Die beiden Bezahleinheiten sind in der Regel jeweils mit einem Lesegerät und einem Drucker ausgerüstet. Mit Hilfe des Lesegerätes erfolgt ein etwaiger Datenaustausch mit einem kundenseitigen Datenträger, beispielsweise einer Kreditkarte, einer EC-Karte oder auch einer Kundenkarte. Grundsätzlich kann es sich aber auch um ein Mobilfunkgerät oder dergleichen handeln, so dass über die Kommunikation mit dem Kunden der elektronische Bezahlvorgang initiiert wird. Mit Hilfe des Druckers kann dann der Bezahlvorgang quittiert werden, wobei zugleich die jeweils eingekauften Waren auf einem zugehörigen Warenbon ausgegeben werden mögen. Das alles geschieht im Wesentlichen ohne Eingriff einer Kassierperson und einfach im Dialog zwischen dem Kunden und der elektronischen Bezahleinheit. Die Kassierperson übernimmt in diesem Zusammenhang allenfalls eine Kontrollfunktion.

Die beiden Warenschächte sind in der Regel und vorteilhaft durch einen bewegbaren, insbesondere um eine Achse schwenkbaren, Warentrenner voneinander separiert. Dadurch kann die auf ihrem Kassenarbeitsplatz befindliche Kassierperson den Warenstrom des ersten Kunden und des zweiten Kunden jeweils in den zugehörigen Warenschacht lenken.

Außerdem ist die Auslegung meistens so getroffen, dass sich an den jeweiligen Warenschacht eine Parkeinrichtung für einen Einkaufswagen anschließt. Da erfindungsgemäß warenstromendseitig des Kassentisches zwei Warenschächte vorgesehen sind, finden sich auch die betreffenden Parkeinrichtungen in unmittelbarer Nachbarschaft zum jeweiligen Warenschacht und schließen sich an diesen in Richtung des Warenstromes an. Dabei kann die Parkeinrichtung jeweils mit einem Anschlag am Warenschacht ausgerüstet werden, welcher für die Positionierung eines Einkaufswagens dient. Außerdem ist die Parkeinrichtung in der Regel mit einer optischen Anzeige für die Position des Einkaufswagens ausgerüstet. Bei dieser optischen Anzeige kann es sich im einfachsten Fall um einen Aufdruck, eine Lackierung etc. auf einer Bodenfläche handeln. Grundsätzlich kann die Parkeinrichtung aber auch durch eine Bildprojektion auf der betreffenden Bodenfläche berührungslos angezeigt werden.

Meistens ist die Auslegung zusätzlich noch so getroffen, dass die optische Anzeige für die Position des Einkaufswagens zugleich mit einer optischen Anzeige für den Kunden ausgerüstet ist. Hierbei kann es sich im einfachsten Fall um stilisierte Schuhe handeln, so dass für den Kunden die beste Position beim Beladen seines Einkaufswagens ersichtlich wird. Auch in diesem Fall lässt sich die optische Anzeige für den Kunden allgemein als Projektion auf der Bodenfläche wiedergeben und einrichten.

Darüber hinaus hat es sich bewährt, wenn der zweite Warenschacht für die Abfertigung des zweiten Kunden in Verlängerung des Förderbandes angeordnet ist. Dadurch wird eine besonders intuitive Kundenführung erreicht. Denn der erste Kunde wird auf diese Weise unter Rückgriff auf den ersten Warenschacht abgefertigt, welcher parallel zum zweiten Warenschacht und folglich versetzt im Vergleich zum Förderband angeordnet ist. Dadurch ist während des Zahlvorganges des ersten Kunden die Parkeinrichtung für den zweiten Kunden frei, welche sich ebenso wie der zweite Warenschacht in Verlängerung des Förderbandes findet.

Da sich der zweite Kunde mit seinem Einkaufswagen entlang des Förderbandes bewegt, kann er unmittelbar die Parkeinrichtung im Anschluss an den zweiten Warenschacht in Verlängerung des Förderbandes nutzen, was besonders intuitiv und einleuchtend ist.

Gegenstand der Erfindung ist auch ein Verfahren zum Betrieb einer solchen Kassieranlage für Waren, wie es im Anspruch 10 näher erläutert wird. Die Ansprüche 11 ff. betreffen vorteilhafte Ausgestaltungen dieses Verfahrens.

Als Besonderheit ist an dieser Stelle zu berücksichtigen, dass die am Kassenarbeitsplatz befindliche Kassierperson den Zahlvorgang des ersten Kunden an der ersten Bezahleinheit des ersten Warenschachtes initiiert. Das mag durch Abschluss der Warenerfassung des ersten Kunden erfolgen. Der eigentliche Bezahlvorgang erfolgt dann durch Dialog des ersten Kunden mit der ersten Bezahleinheit. Dabei mag die Kassierperson den betreffenden Bezahlvorgang initiieren bzw. triggern. Anschließend an die Warenerfassung des ersten Kunden und den eingeleiteten Zahlvorgang kann die betreffende Kassierperson die Waren des zweiten Kunden mit Hilfe des elektronischen Lesegerätes erfassen. Der Status des jeweiligen Warenschachtes lässt sich dabei an einer Anzeige wiedergeben und wird in der Regel von der Kassieranlage bzw. einer zugehörigen Steuereinheit automatisch vorgegeben. Beispielsweise mag der Status des jeweiligen Warenschachtes zu unterschiedlichen Farbdarstellungen korrespondieren. Die Anzeige stellt einen Bestandteil der Kasse dar und kann beispielsweise als Bildschirm ausgebildet sein.

So gehört eine grüne Farbkennzeichnung des betreffenden Warenschachtes dazu, dass dieser zur Befüllung mit Waren eines Kunden genutzt werden kann. Durch eine gelbe Farbe wird ein Status des jeweiligen Warenschachtes dergestalt dokumentiert, dass der betreffende Warenschacht in Verwendung ist, weil beispielsweise der Zahlvorgang des ersten Kunden absolviert wird. Schließlich kann mit Hilfe einer roten Farbe der Anzeige dokumentiert werden, dass beispielsweise eine Störung beim Bezahlvorgang des betreffenden Kunden beobachtet wird.

Darüber hinaus besteht im Rahmen der Erfindung die Möglichkeit, dass der Kunde wahlweise an der Kasse oder der seinem Warenschacht zugeordneten elektronischen Bezahleinheit bezahlt. Das Bezahlen an der Kasse erfolgt dabei in der Regel durch Bargeld, während über die elektronische Bezahleinheit der beschriebene elektronische Zahlungsverkehr abgewickelt wird. Sofern der Kunde mit Bargeld an der Kasse seinen Zahlbetrag entrichtet, wird die Kassieranlage für die Waren des zweiten Kunden nicht freigegeben, weil in diesem Fall die Kassierperson mit dem Zahlvorgang beschäftigt ist, folglich die Waren des zweiten Kunden mit Hilfe des elektronischen Lesegerätes nicht erfassen kann. D.h., bei einem Zahlvorgang des ersten Kunden an der Kasse werden die Waren des zweiten Kunden erst nach dem Abschluss des Zahlvorganges erfasst, weil in diesem Fall der Zahlvorgang mit Bargeld erfolgt und dementsprechend das Kassierpersonal gebunden ist.

Im Ergebnis wird eine Kassieranlage für Waren und insbesondere Einzelhandelswaren zur Verfügung gestellt, die neben einer flexiblen Zahlungsmethode sowohl mit Bargeld als auch bargeldlos durch einen elektronischen Zahlvorgang zusätzlich und insbesondere die Möglichkeit eröffnet, die Abfertigung der Kunden erheblich zu beschleunigen. Das setzt allerdings einen elektronischen Bezahlvorgang des betreffenden Kunden voraus. Tatsächlich kann während des Zahlvorganges des ersten Kunden an der ersten Bezahleinheit des ersten Warenschachtes so vorgegangen werden, dass die Kassierperson während dieses Zahlvorganges bereits die Waren des zweiten Kunden mit Hilfe des elektronischen Lesegerätes erfasst und auch erfassen kann. Zugleich können die betreffenden Waren in den zweiten Warenschacht überführt werden. Das erhöht die Kundenfrequenz bzw. den Kundendurchlauf und auch die Kundenzufriedenheit erheblich. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine Aufsicht auf die erfindungsgemäße Kassieranlage schematisch,
- Fig. 2: die Kassieranlage nach der Fig. 1 perspektivisch mit Blickrichtung in Richtung auf die beiden Parkeinrichtungen und die Warenschächte sowie
- Fig. 3: den Kassenarbeitsplatz mit den beiden Warenschächten perspektivisch in einer anderen Ansicht.

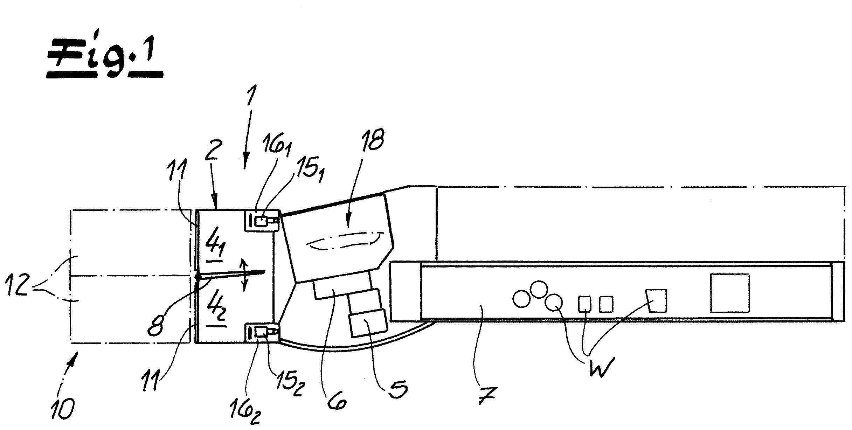

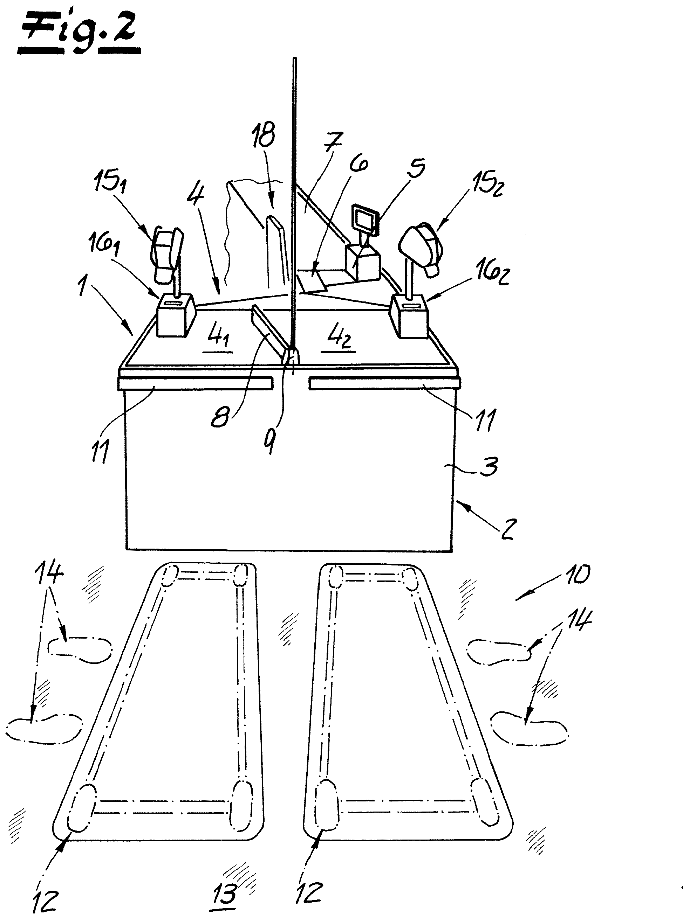

In den Figuren ist eine Kassieranlage für Waren W dargestellt. Bei den Waren W handelt es sich nicht einschränkend und entsprechend der schematischen Darstellung in der Fig. 1 um Einzelhandelswaren. Dazu ist die Kassieranlage mit einem Kassentisch 1 ausgerüstet, der auf einem Korpus 2 ruht, welcher aus verschiedenen Korpuselementen aufgebaut ist. Tatsächlich erkennt man in der Darstellung nach der Fig. 2 ein endseitiges Korpuselement 3, welches kopfseitig mit zwei Warenschächten 4 ausgerüstet ist, die sich warenstromendseitig des Kassentisches 1 finden. Grundsätzlich können auch mehr als zwei Warenschächte 4 realisiert sein. Nicht dargestellt ist die weitere Möglichkeit, dass ein oder mehrere Spiegel sowie ein oder mehrere Kameras vorgesehen sind, mit deren Hilfe eine Kassierperson den Inhalt eines Einkaufswagens dahingehend überprüfen kann, ob der betreffende Kunde sämtliche Waren W tatsächlich auf dem Kassentisch 1 abgelegt hat oder nicht.

Zum grundsätzlichen Aufbau der Kassieranlage gehört noch ein elektronisches Lesegerät 5 für die Waren W sowie eine Kasse 6. Für den Transport der Waren W sorgt ein Transportband 7. Bei dem elektronischen Lesegerät 5 für die Waren W handelt es sich nach dem Ausführungsbeispiel um einen Scanner und insbesondere Barcodescanner, mit dessen Hilfe die Waren W hinsichtlich Menge und Preis eingelesen und in der Kasse 6 aufaddiert werden können. Dazu verfügt die elektronische Kasse 6 über einen Bildschirm.

Wie bereits erläutert, sind jeweils warenstromendseitig des Kassentisches 1 zwei Warenschächte 4; 4₁, 4₂ vorgesehen. Dabei ist ein zweiter Warenschacht 4₂ in Verlängerung des Förderbandes 7 angeordnet, wie man insbesondere anhand der Aufsicht in der Fig. 1 erkennen kann. Der weitere erste Warenschacht 4₁ findet sich in unmittelbarer Nachbarschaft zum zweiten Warenschacht 4₂ versetzt zum Förderband 7. Beide Warenschächte 4₁ und 4₂ sind dabei durch einen Arm bzw. Warentrenner 8 voneinander getrennt, bei dem es sich nach dem Ausführungsbeispiel um einen Schwenkarm 8 handelt, der um eine Achse 9 drehbar gelagert ist.

Die beiden Warenschächte 4₁, 4₂ mögen dabei jeweils schräg abfallend in Richtung auf eine sich endseitig anschließende Parkeinrichtung 10 für einen nicht ausdrücklich dargestellten Einkaufswagen abfallen. Die sich an den jeweiligen Warenschacht 4₁, 4₂ anschließende Parkeinrichtung 10 für den Einkaufswagen ist mit einem Anschlag 11 für den Einkaufswagen am Warenschacht 4₁, 4₂ sowie einer optischen Anzeige 12 für die Position des Einkaufswagens ausgerüstet. Anhand des Ausführungsbeispiels erkennt man, dass die optische Anzeige 12 auf einer Bodenfläche 13 ausgebildet ist. Hierbei kann es sich um eine Lackierung oder dergleichen handeln. Grundsätzlich kann die optische Anzeige 12 aber auch als Projektion berührungslos realisiert und umgesetzt werden. Darüber hinaus erkennt man noch eine weitere optische Anzeige 14 für einen Kunden in Gestalt von stilisierten Fußabdrücken, die sich jeweils quer zur optischen Anzeige bzw. dem Aufdruck 12 für den Einkaufswagen auf der Bodenfläche 13 erstrecken.

Nach dem Ausführungsbeispiel und erfindungsgemäß ist jedem Warenschacht 4₁, 4₂ eine eigene elektronische Bezahleinheit 15₁, 16₁ sowie 15₂, 16₂ zugeordnet. Tatsächlich setzen sich beide Bezahleinheiten 15₁, 16₁; 15₂, 16₂ jeweils aus einem Lesegerät 15₁, 15₂ und zusätzlich einem Drucker 16₁, 16₂ zusammen. Mit Hilfe des Druckers 16₁ 16₂ kann jeweils ein Warenbon nach beendetem elektronischem Zahlvorgang ausgegeben werden, welcher nicht nur den Zahlbetrag sondern auch die vom betreffenden Kunden eingekauften Waren anzeigt und ausgibt.

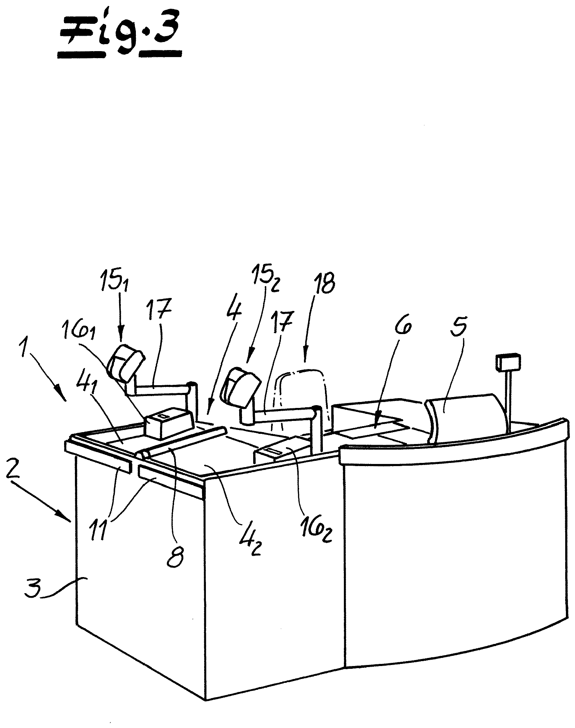

Man erkennt, dass beide Bezahleinheiten 15₁, 16₁; 15₂, 16₂ bzw. ihre zugehörigen Lesegeräte 15₁, 15₂ jeweils an einen Arm 17 angeschlossen sind, bei dem es sich nach dem Ausführungsbeispiel um einen Schwenkarm 17 handelt. Das wird insbesondere anhand der Darstellung in der Fig. 3 deutlich. Tatsächlich ist die Auslegung dabei so getroffen, dass der fragliche Schwenkarm und damit die beiden Bezahleinheiten 15₁, 16₁; 15₂, 16₂ jeweils randseitig des die beiden Warenschächte 4₁, 4₂ kopfseitig aufweisenden Korpuselementes 3 des Kassentisches 1 angeordnet sind. Dadurch sind die beiden Bezahleinheiten 15₁, 16₁; 15₂, 16₂ von dem jeweiligen Kunden leicht erreichbar, welcher sich idealerweise seitlich des Korpuselementes 3 befindet und in dieser Position den elektronischen Zahlvorgang abwickeln kann.

Dabei ist die Auslegung erfindungsgemäß so getroffen, dass jedem Warenschacht 4₁, 4₂ eine eigene elektronische Bezahleinheit zugeordnet ist, nämlich dem ersten Warenschacht 4₁ die erste elektronische Bezahleinheit 15₁, 16₁. Demgegenüber ist der zweite Warenschacht 4₂ mit der zweiten elektronischen Bezahleinheit 15₂, 16₂ ausgerüstet.

Auf diese Weise kann zumindest während des Zahlvorganges eines ersten Kunden an der ersten Bezahleinheit 15₁, 16₁ des ersten Warenschachtes 4₁ so vorgegangen werden, dass die Waren eines zweiten Kunden mit Hilfe des elektronischen Lesegerätes 5 erfasst und in den zweiten Warenschacht 4₂ überführt werden können. Man erkennt, dass im Ausführungsbeispiel der erste Warenschacht 4₁ in der Frontansicht nach der Fig. 2 links angeordnet ist, wohingegen der zweite Warenschacht 4₂ demgegenüber rechts und benachbart hierzu seine Anordnung findet.

Auf diese Weise lässt sich die Abfertigung der Kunden erheblich beschleunigen. Denn während der erste Kunde seinen Zahlvorgang autark im Dialog mit der ersten Bezahleinheit 15₁, 16₁ abwickelt, können bereits Waren W des zweiten Kunden seitens einer Kassierperson mit Hilfe des elektronischen Lesegerätes 5 für die Waren W erfasst werden. Denn die sich im Bereich eines Kassenarbeitsplatzes 18 befindende Kassierperson wird in den Zahlvorgang des ersten Kunden typischerweise nicht involviert noch ist hierfür verantwortlich, weil der Zahlvorgang autark im Dialog des ersten Kunden mit der ersten Bezahleinheit 15₁, 16₁ erfolgt. Die Kassierperson übernimmt allenfalls eine Vorgehensweise dahingehend, dass der Zahlvorgang initiiert und ggf. kontrolliert wird.

Tatsächlich ist die Auslegung dabei so getroffen, dass die sich am Kassenarbeitsplatz 18 befindliche Kassierperson den Zahlvorgang des ersten Kunden an der ersten Bezahleinheit 15₁, 16₁ des ersten Warenschachtes 4₁ initiiert und anschließend die Waren W des zweiten Kunden mit Hilfe des elektronischen Lesegerätes 5 erfasst. Der Status des jeweiligen Warenschachtes 4₁, 4₂ kann dabei an einer zur Kasse 6 gehörigen Anzeige wiedergegeben werden. Dafür mag eine nicht dargestellte Steuereinheit der Kasse 6 sorgen und zusätzlich der Bildschirm dienen. Diese Anzeige gibt darüber hinaus den jeweiligen Status farbig im Sinne von "grün", "gelb" und "rot" des betreffenden Warenschachtes 4₁, 4₂ wieder, wie dies einleitend bereits im Detail erläutert wurde. Dabei wird der Zahlvorgang des Kunden von der betreffenden Anzeige ebenfalls dokumentiert.

Darüber hinaus besteht die Möglichkeit, dass der Kunde wahlweise an der Kasse 6 oder der dem zugehörigen Warenschacht 4₁, 4₂ zugeordneten elektronischen Bezahleinheit 15₁, 16₁; 15₂, 16₂ jeweils bezahlt. Bei einem Zahlvorgang des Kunden respektive ersten Kunden an der Kasse 6 werden die Waren des zweiten Kunden erst nach Abschluss des Zahlvorganges erfasst, weil der Zahlvorgang an der Kasse 6 typischerweise mit Bargeld erfolgt, folglich von der Kassierperson am Kassenarbeitsplatz 18 initiiert und abgewickelt werden muss. Dadurch steht die Kassierperson - im Unterschied zu einem elektronischen Zahlvorgang - nicht für das während des Bezahlvorganges gleichzeitige Erfassen der Waren W des zweiten Kunden zur Verfügung.

Im Regelfall erfolgt jedoch die Bezahlung der Waren W seitens der Kunden auf elektronischem Wege, nämlich durch einen Dialog mit der betreffenden Bezahleinheit 15₁, 16₁; 15₂, 16₂. Dadurch kann während des Zahlvorganges des erstem Kunden an der ersten Bezahleinheit 15₁, 16₁ so vorgegangen werden, dass die Waren W des zweiten Kunden von der Kassierperson am Kassenarbeitsplatz 18 mit Hilfe des elektronischen Lesegerätes 5 bereits erfasst und in den zweiten Warenschacht 4₂ überführt werden können.

## Patentansprüche

1. Kassieranlage für Waren (W), insbesondere Einzelhandelswaren (W), mit einem Kassentisch (1) mit einer Kasse (6) sowie einem elektronischen Lesegerät (5) für die Waren (W), ferner mit einem Transportband (7) für die Waren (W), und mit wenigstens zwei warenstromendseitig des Kassentisches (1) vorgesehenen Warenschächten (4; 4₁, 4₂),
**dadurch gekennzeichnet, dass**
jedem Warenschacht (4; 4₁, 4₂) eine eigene elektronische Bezahleinheit (15₁, 16₁; 15₂, 16₂) zugeordnet ist, so dass zumindest während des Zahlvorganges eines ersten Kunden an einer ersten Bezahleinheit (15₁, 16₁) des ersten Warenschachtes (4₁) die Waren (W) eines zweiten Kunden mit Hilfe des elektronischen Lesegerätes (5) erfasst und in den zweiten Warenschacht (4₂) überführt werden können.

2. Kassieranlage nach Anspruch 1, **dadurch gekennzeichnet, dass** beide Bezahleinheiten (15₁, 16₁; 15₂, 16₂) jeweils an einen Arm (17) angeschlossen sind.

3. Kassieranlage nach Anspruch 1 oder 2, **dadurch gekennzeichnet, dass** beide Bezahleinheiten (15₁, 16₁; 15₂, 16₂) jeweils randseitig eines die beiden Warenschächte (4₁, 4₂) kopfseitig aufweisenden Korpuselementes (3) des Kassentisches (1) angeordnet sind.

4. Kassieranlage nach einem der Ansprüche 1 bis 3, **dadurch gekennzeichnet, dass** beide Bezahleinheiten (15₁, 16₁; 15₂, 16₂) mit einem Lesegerät (15₁, 15₂) und einem Drucker (16₁, 16₂) ausgerüstet sind.

5. Kassieranlage nach einem der Ansprüche 1 bis 4, **dadurch gekennzeichnet, dass** die beiden Warenschächte (4₁, 4₂) durch einen bewegbaren, insbesondere um eine Achse (9) schwenkbaren, Warentrenner (8) voneinander separiert sind.

6. Kassieranlage nach einem der Ansprüche 1 bis 5, **dadurch gekennzeichnet, dass** sich an den jeweiligen Warenschacht (4₁, 4₂) eine Parkeinrichtung (10) für einen Einkaufswagen anschließt.

7. Kassieranlage nach Anspruch 6, **dadurch gekennzeichnet, dass** die Parkeinrichtung (10) jeweils einen Anschlag (11) am Warenschacht (4₁, 4₂) sowie gegebenenfalls eine optische Anzeige (12) für die Position des Einkaufswagens aufweist.

8. Kassieranlage nach Anspruch 7, **dadurch gekennzeichnet, dass** die optische Anzeige (12) auf einer Bodenfläche (13) ausgebildet ist.

9. Kassieranlage nach einem der Ansprüche 1 bis 8, **dadurch gekennzeichnet, dass** der zweite Warenschacht (4₂) in Verlängerung des Transportbandes (7) angeordnet ist.

10. Verfahren zum Betrieb einer Kassieranlage für Waren (W), insbesondere Einzelhandelswaren (W), mit einem Kassentisch (1) mit einer Kasse (6) sowie einem elektronischen Lesegerät (5) für die Waren (W), ferner mit einem Transportband (7) für die Waren (W), und mit zwei warenstromendseitig des Kassentisches (1) vorgesehenen Warenschächten (4; 4₁, 4₂),
**dadurch gekennzeichnet, dass**
jedem Warenschacht (4; 4₁, 4₂) eine eigene elektronische Bezahleinheit (15₁, 16₁; 15₂, 16₂) zugeordnet ist, so dass zumindest während des Zahlvorganges eines ersten Kunden an einer ersten Bezahleinheit (15₁, 16₁) des ersten Warenschachtes (4₁) die Waren (W) eines zweiten Kunden mit Hilfe des elektronischen Lesegerätes (5) erfasst und in den zweiten Warenschacht (4₂) überführt werden können.

11. Verfahren nach Anspruch 1, **dadurch gekennzeichnet, dass** eine Kassierperson den Zahlvorgang des ersten Kunden an der ersten Bezahleinheit (15₁, 16₁) des ersten Warenschachtes (4₁) initiiert und anschließend die Waren (W) des zweiten Kunden mit Hilfe des elektronischen Lesegerätes (5) erfasst.

12. Verfahren nach Anspruch 10 oder 11, **dadurch gekennzeichnet, dass** der Status des jeweiligen Warenschachtes (4₁, 4₂) von der Kassierperson vorgewählt und an einer Anzeige wiedergegeben wird.

13. Verfahren nach Anspruch 12, **dadurch gekennzeichnet, dass** der Zahlvorgang des Kunden von der Anzeige dokumentiert wird.

14. Verfahren nach einem der Ansprüche 10 bis 13, **dadurch gekennzeichnet, dass** der Kunde wahlweise an der Kasse (6) oder der seinem Warenschacht (4₁, 4₂) zugeordneten elektronischen Bezahleinheit (15₁, 16₁; 15₂, 16₂) bezahlt.

15. Verfahren nach einem der Ansprüche 10 bis 14, **dadurch gekennzeichnet, dass** bei einem Zahlvorgang des ersten Kunden an der Kasse (6) erst nach seinem Abschluss die Waren (W) des zweiten Kunden erfasst werden.

## Geänderte Patentansprüche

### Geänderte Patentansprüche gemäss Regel 137(2) EPÜ.

1. Kassieranlage für Waren (W), insbesondere Einzelhandelswaren (W), mit einem Kassentisch (1) mit einer Kasse (6) sowie einem elektronischen Lesegerät (5) für die Waren (W), ferner mit einem Transportband (7) für die Waren (W), und mit wenigstens zwei warenstromendseitig des Kassentisches (1) vorgesehenen Warenschächten (4; 4₁, 4₂), wobei
jedem Warenschacht (4; 4₁, 4₂) eine eigene elektronische Bezahleinheit (15₁, 16₁; 15₂, 16₂) zugeordnet ist, so dass zumindest während des Zahlvorganges eines ersten Kunden an einer ersten Bezahleinheit (15₁, 16₁) des ersten Warenschachtes (4₁) die Waren (W) eines zweiten Kunden mit Hilfe des elektronischen Lesegerätes (5) erfasst und in den zweiten Warenschacht (4₂) überführt werden können,
**dadurch gekennzeichnet, dass**
sich der erste Warenschacht (4₁) in unmittelbarer Nachbarschaft zum zweiten Warenschacht (4₂) versetzt zum Förderband (7) findet und der zweite Warenschacht (4₂) in Verlängerung des Transportbandes (7) angeordnet ist, so dass
eine sich am Kassenarbeitsplatz (18) befindliche Kassierperson den Zahlvorgang des ersten Kunden an der ersten Bezahleinheit (15_{1,} 16₁) des ersten Warenschachtes (4₁) initiiert und anschließend die Waren (W) des zweiten Kunden mit Hilfe des elektronischen Lesegerätes (5) erfasst.

2. Kassieranlage nach Anspruch 1, **dadurch gekennzeichnet, dass** beide Bezahleinheiten (15₁, 16₁; 15₂, 16₂) jeweils an einen Arm (17) angeschlossen sind.

3. Kassieranlage nach Anspruch 1 oder 2, **dadurch gekennzeichnet, dass** beide Bezahleinheiten (15₁, 16₁; 15₂, 16₂) jeweils randseitig eines die beiden Warenschächte (4₁, 4₂) kopfseitig aufweisenden Korpuselementes (3) des Kassentisches (1) angeordnet sind.

4. Kassieranlage nach einem der Ansprüche 1 bis 3, **dadurch gekennzeichnet, dass** beide Bezahleinheiten (15₁, 16₁; 15₂, 16₂) mit einem Lesegerät (15₁, 15₂) und einem Drucker (16₁, 16₂) ausgerüstet sind.

5. Kassieranlage nach einem der Ansprüche 1 bis 4, **dadurch gekennzeichnet, dass** die beiden Warenschächte (4₁, 4₂) durch einen bewegbaren, insbesondere um eine Achse (9) schwenkbaren, Warentrenner (8) voneinander separiert sind.

6. Kassieranlage nach einem der Ansprüche 1 bis 5, **dadurch gekennzeichnet, dass** sich an den jeweiligen Warenschacht (4₁, 4₂) eine Parkeinrichtung (10) für einen Einkaufswagen anschließt.

7. Kassieranlage nach Anspruch 6, **dadurch gekennzeichnet, dass** die Parkeinrichtung (10) jeweils einen Anschlag (11) am Warenschacht (4₁, 4₂) sowie gegebenenfalls eine optische Anzeige (12) für die Position des Einkaufswagens aufweist.

8. Kassieranlage nach Anspruch 7, **dadurch gekennzeichnet, dass** die optische Anzeige (12) auf einer Bodenfläche (13) ausgebildet ist.

9. Kassieranlage nach einem der Ansprüche 1 bis 8, **dadurch gekennzeichnet, dass** der zweite Warenschacht (4₂) in Verlängerung des Transportbandes (7) angeordnet ist.

10. Verfahren zum Betrieb einer Kassieranlage für Waren (W), insbesondere Einzelhandelswaren (W), mit einem Kassentisch (1) mit einer Kasse (6) sowie einem elektronischen Lesegerät (5) für die Waren (W), ferner mit einem Transportband (7) für die Waren (W), und mit zwei warenstromendseitig des Kassentisches (1) vorgesehenen Warenschächten (4; 4₁, 4₂), wonach
jedem Warenschacht (4; 4₁, 4₂) eine eigene elektronische Bezahleinheit (15₁, 16₁; 15₂, 16₂) zugeordnet wird, so dass zumindest während des Zahlvorganges eines ersten Kunden an einer ersten Bezahleinheit (15₁, 16₁) des ersten Warenschachtes (4₁) die Waren (W) eines zweiten Kunden mit Hilfe des elektronischen Lesegerätes (5) erfasst und in den zweiten Warenschacht (4₂) überführt werden können,
**dadurch gekennzeichnet, dass**
sich der erste Warenschacht (4₁) in unmittelbarer Nachbarschaft zum zweiten Warenschacht (4₂) versetzt zum Förderband (7) findet und der zweite Warenschacht (4₂) in Verlängerung des Transportbandes (7) angeordnet ist, so dass
eine sich am Kassenarbeitsplatz (18) befindliche Kassierperson den Zahlvorgang des ersten Kunden an der ersten Bezahleinheit (15₁, 16₁) des ersten Warenschachtes (4₁) initiiert und anschließend die Waren (W) des zweiten Kunden mit Hilfe des elektronischen Lesegerätes (5) erfasst.

11. Verfahren nach Anspruch 1, **dadurch gekennzeichnet, dass** eine Kassierperson den Zahlvorgang des ersten Kunden an der ersten Bezahleinheit (15_{1,}16₁) des ersten Warenschachtes (4₁) initiiert und anschließend die Waren (W) des zweiten Kunden mit Hilfe des elektronischen Lesegerätes (5) erfasst.

12. Verfahren nach Anspruch 10 oder 11, **dadurch gekennzeichnet, dass** der Status des jeweiligen Warenschachtes (4₁, 4₂) von der Kassierperson vorgewählt und an einer Anzeige wiedergegeben wird.

13. Verfahren nach Anspruch 12, **dadurch gekennzeichnet, dass** der Zahlvorgang des Kunden von der Anzeige dokumentiert wird.

14. Verfahren nach einem der Ansprüche 10 bis 13, **dadurch gekennzeichnet, dass** der Kunde wahlweise an der Kasse (6) oder der seinem Warenschacht (4₁, 4₂) zugeordneten elektronischen Bezahleinheit (15₁, 16₁; 15₂,16₂) bezahlt.

15. Verfahren nach einem der Ansprüche 10 bis 14, **dadurch gekennzeichnet, dass** bei einem Zahlvorgang des ersten Kunden an der Kasse (6) erst nach seinem Abschluss die Waren (W) des zweiten Kunden erfasst werden.
